# EUROPEAN PATENT SPECIFICATION

(11) **EP 1 685 213 B1**
(45) Date of publication and mention of the grant of the patent: **04.03.2015**
(21) Application number: 04796819.3
(22) Date of filing: 29.10.2004
(51) Int. Cl.: C10G 65/04, B01J 35/00, B01J 23/85

(54) **A PROCESS FOR MAKING LUBE OIL BASESTOCKS**
VERFAHREN ZUR HERSTELLUNG VON SCHMIERSTOFFGRUNDLAGEN
PROCEDE DE PRODUCTION DE STOCKS DE BASE D'HUILE LUBRIFIANTE

(30) Priority: 10.11.2003 US 518739 P; 09.09.2004 US 608447 P
(43) Date of publication of application: 02.08.2006
(73) Proprietor: ExxonMobil Research and Engineering Company, Annandale, NJ 08801-0900 (US)
(72) Inventor: SCHLEICHER, Gary, P., Baton Rouge, LA 70817 (US); RILEY, Kenneth, L., Baton Rouge, LA 70808 (US); SMILEY, Randolph, J., Baton Rouge, LA 70817 (US)
(74) Representative: Mareschal, Anne
(86) International application number: PCT/US2004/036108
(87) International publication number: WO 2005/047432

(56) References cited:
- WO-A-00/42131
- WO-A1-2005/047434

## Description

### FIELD OF THE INVENTION

This invention relates to a process for preparing lubricating oil basestocks from lube oil boiling range feedstreams. More particularly, the present invention is directed at a process wherein a wax containing feedstock is hydrotreated over a stacked bed catalyst system thereby producing a lube oil boiling range basestock.

### BACKGROUND OF THE INVENTION

It has long been recognized that one of the most valuable products generated through the refining of crude mineral oils is lubricating oils. It is common practice to recover lubricating oil basestocks by solvent extracting, with a selective solvent, undesirable components such as sulfur compounds, oxygenated compounds, and aromatics from straight distillates. However, with the decline in the availability of paraffinic base crudes, and a corresponding increase in the proportion of naphthenic and asphaltic base crudes, it is becoming increasingly difficult to meet the demand for lubricating oil basestocks, or base oils. For example, American Petroleum Institute (API) requirements for Group II basestocks include a saturates content of at least 90%, a sulfur content of 0.03 wt.% or less and a viscosity index (VI) between 80 and 120. Thus, there is a trend in the lube oil market to use Group II basestocks instead of Group I basestocks in order to meet the demand for higher quality basestocks that provide for increased fuel economy, reduced emissions, etc.

Conventional techniques for preparing basestocks such as hydrocracking or solvent extraction require severe operating conditions such as high pressure and temperature or high solvent:oil ratios and high extraction temperatures to reach these higher basestock qualities. Either alternative involves expensive operating conditions and low yields.

Hydrocracking has been combined with hydrotreating as a preliminary step. However, this combination also results in decreased yields of lubricating oils due to the conversion to distillates that typically accompany the hydrocracking process.

WO00/42131 discloses hydroprocessing for producing basestocks using stacked bed hydroprocessing catalyst system.

Thus, as the demand for quality lube oil basestock continues to increase, the search for new and different processes, catalysts, and catalyst systems that exhibit improved activity, increased yields, selectivity and/or longevity is a continuous, ongoing exercise. Therefore, there is a need in the lube oil market to provide processes that can produce lube oil basestocks that meet the demand for increased fuel economy, reduced emissions, etc.

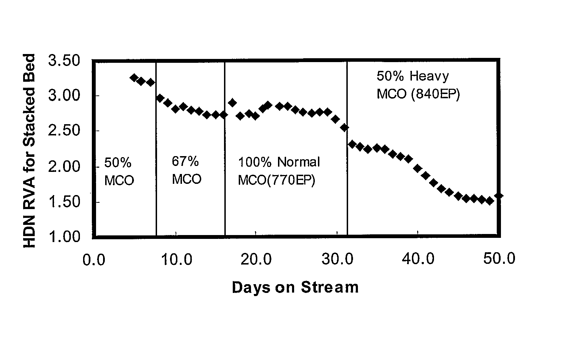

### BRIEF DESCRIPTION OF THE FIGURE

The Figure is a plot of the relative volume activity of various catalysts and catalyst systems versus the days the respective catalysts and catalyst systems were on stream.

### SUMMARY OF THE INVENTION

The present invention is directed at a process to prepare lubricating oil basestocks from lube oil boiling range feedstocks. The process comprises:
a) contacting a lube oil boiling range feedstock with a stacked bed hydrotreating catalyst system in a reaction stage operated under effective conditions thereby producing a hydrotreated effluent comprising at least a gaseous product and a hydrotreated lubricating oil boiling range feedstock, wherein the second hydrotreating catalyst is downstream, in relation to the flow of the lubricating oil feedstock, from the first hydrotreating catalyst; and
b) stripping the hydrotreated effluent to remove at least a portion of the gaseous product from the hydrotreated effluent thereby producing at least a lubricating oil basestock,
wherein said first hydrotreating catalyst is selected from supported hydrotreating catalysts comprising 2 to 20 wt.% of at least one Group VIII metal, and 5 to 50 wt.% of at least one Group VI metal on a high surface area support material and having an average pore diameter of greater than 10nm, as measured by water adsorption porosimetry, and said second hydrotreating catalyst is selected from bulk metal hydrotreating catalyst comprising 30 to 100 wt.% of at least one Group VIII non-noble metal and at least one Group VIB metal, based on the total weight of the bulk catalyst particles, calculated as metal oxides and wherein the bulk catalyst particles have a surface area of at least 10 m2 /g, and wherein the stacked bed hydrotreating catalyst system comprises 5-95 vol.% of the first hydrotreating catalyst with the second hydrotreating catalyst comprising the remainder.

### DETAILED DESCRIPTION OF THE INVENTION

It should be noted that the terms "feedstock" and "feedstream" as used herein are synonymous.

The present process involves hydrotreating a lubricating oil feedstock with a stacked bed hydrotreating catalyst system in a reaction stage operated under effective hydrotreating conditions to produce a hydrotreated effluent comprising at least a gaseous product and a hydrotreated lubricating oil feedstock. The hydrotreated effluent is stripped to remove at least a portion of the gaseous product from the hydrotreated effluent thereby producing at least a lubricating oil basestock. Lube oil basestocks having a saturates content of at least 90%, a sulfur content of 0.03 wt.% or less, and a viscosity index (VI) between 80 and 120 can readily be produced through the use of the instant invention.

### Lubricating Oil Feedstocks

Feedstocks suitable for use in the present invention are wax-containing feeds that boil in the lubricating oil range, typically having a 10% distillation point greater than 650°F (343°C) and an endpoint greater than 800°F (426°C), measured by ASTM D 86 or ASTM 2887. These feedstocks can be derived from mineral sources, synthetic sources, or a mixture of the two. Non-limiting examples of suitable lubricating oil feedstocks include those derived from sources such as oils derived from solvent refining processes such as raffinates, partially solvent dewaxed oils, deasphalted oils, distillates, vacuum gas oils, coker gas oils, slack waxes, foots oils and the like, dewaxed oils, automatic transmission fluid feedstocks, and Fischer-Tropsch waxes. Automatic transmission fluid ("ATF") feedstocks are lube oil feedstocks having an initial boiling point between 200°C and 275°C, and a 10% distillation point greater than 300°C. ATF feedstocks are typically 75-110N feedstocks.

These feedstocks may also have high contents of nitrogen- and sulfur-contaminants. Feeds containing up to 0.2 wt.% of nitrogen, based on feed and up to 3.0 wt.% of sulfur can be processed in the present process. Feeds having a high wax content typically have high viscosity indexes of up to 200 or more. Sulfur and nitrogen contents may be measured by standard ASTM methods D5453 and D4629, respectively.

### Hydrotreating

It should be noted that the term "hydrotreating" as used herein refers to processes wherein a hydrogen-containing treat gas is used in the presence of a suitable catalyst that is primarily active for the removal of heteroatoms, such as sulfur, and nitrogen, and saturation of aromatics. In the practice of the present invention, the lubricating oil feedstock is hydrotreated with a stacked bed hydrotreating catalyst system in a reaction stage operated under effective hydrotreating conditions to produce a hydrotreated effluent comprising at least a gaseous product and a hydrotreated lubricating oil feedstock.

The catalyst system used herein comprises at least a first and second hydrotreating catalyst. By "stacked bed" it is meant that the first catalyst appears in a separate catalyst bed, reactor, or reaction zone, and the second hydrotreating catalyst appears in a separate catalyst bed, reactor, or reaction zone downstream, in relation to the flow of the lubricating oil feedstock, from the first catalyst.

The first hydrotreating catalyst is a supported catalyst. Suitable hydrotreating catalysts for use as the first catalyst of the present catalyst system include any conventional hydrotreating catalyst. Conventional hydrotreating catalyst as used herein is meant to refer to those which are comprised of at least one Group VIII metal, preferably Fe, Co and Ni, more preferably Co and/or Ni, and most preferably Ni; and at least one Group VI metal, preferably Mo and W, more preferably Mo, on a high surface area support material, preferably alumina. The Group VIII metal is typically present in an amount ranging from 2 to 20 wt.%, preferably from 4 to 12%. The Group VI metal will typically be present in an amount ranging from 5 to 50 wt.%, preferably from 10 to 40 wt.%, and more preferably from 20 to 30 wt.%. All metals weight percents are on support. By "on support" we mean that the percents are based on the weight of the support. For example, if the support were to weigh 100 g. then 20 wt.% Group VIII metal would mean that 20 g. of Group VIII metal was on the support.

However, not all conventional hydrotreating catalysts fitting the above-described criteria are suitable for use in the present invention. The inventors hereof have unexpectedly found that the average pore diameter of the first catalyst must have a specific size to be suitable for use herein. Thus, in the practice of the present invention, a conventional catalyst, as described above, but having an average pore diameter greater than 10nm, as measured by water adsorption porosimetry, must be used as the first catalyst of the present stacked bed catalyst system. It is preferred that the average pore diameter of the first catalyst, i.e. the conventional hydrotreating catalyst, of the present stacked bed catalyst system be greater than 11nm, more preferably greater than 12nm.

The second hydrotreating catalyst is a bulk metal catalyst. By bulk metal, it is meant that the catalysts are unsupported wherein the bulk catalyst particles comprise 30 - 100 wt.% of at least one Group VIII non-noble metal and at least one Group VIB metal, based on the total weight of the bulk catalyst particles, calculated as metal oxides and wherein the bulk catalyst particles have a surface area of at least 10 m²/g. It is furthermore preferred that the bulk metal hydrotreating catalysts used herein comprise 50 to 100 wt.%, and even more preferably 70 to 100 wt.%, of at least one Group VIII non-noble metal and at least one Group VIB metal, based on the total weight of the particles, calculated as metal oxides. The amount of Group VIB and Group VIII non-noble metals can easily be determined VIB TEM-EDX.

Bulk catalyst compositions comprising one Group VIII non-noble metal and two Group VIB metals are preferred. It has been found that in this case, the bulk catalyst particles are sintering-resistant. Thus the active surface area of the bulk catalyst particles is maintained during use. The molar ratio of Group VIB to Group VIII non-noble metals ranges generally from 10:1 - 1:10 and preferably from 3:1 - 1:3. In the case of a core-shell structured particle, these ratios of course apply to the metals contained in the shell. If more than one Group VIB metal is contained in the bulk catalyst particles, the ratio of the different Group VIB metals is generally not critical. The same holds when more than one Group VIII non-noble metal is applied. In the case where molybdenum and tungsten are present as Group VIB metals, the molybenum:tungsten ratio preferably lies in the range of 9:1 -1:9. Preferably the Group VIII non-noble metal comprises nickel and/or cobalt. It is further preferred that the Group VIB metal comprises a combination of molybdenum and tungsten. Preferably, combinations of nickel/molybdenum/tungsten and cobalt/molybdenum/tungsten and nickel/cobalt/molybdenum/tungsten are used. These types of precipitates appear to be sinter-resistant. Thus, the active surface area of the precipitate is remained during use. The metals are preferably present as oxidic compounds of the corresponding metals, or if the catalyst composition has been sulfided, sulfidic compounds of the corresponding metals.

It is also preferred that the bulk metal hydrotreating catalysts used herein have a surface area of at least 50 m²/g and more preferably of at least 100 m²/g. It is also desired that the pore size distribution of the bulk metal hydrotreating catalysts be approximately the same as the one of conventional hydrotreating catalysts. More in particular, these bulk metal hydrotreating catalysts have preferably a pore volume of 0.05 - 5 ml/g, more preferably of 0.1 - 4 ml/g, still more preferably of 0.1 - 3 ml/g and most preferably 0.1 - 2 ml/g determined by nitrogen adsorption. Preferably, pores smaller than 1 nm are not present. Furthermore these bulk metal hydrotreating catalysts preferably have a median diameter of at least 50 nm, more preferably at least 100 nm, and preferably not more than 5000 µm and more preferably not more than 3000 µm.

Even more preferably, the median particle diameter lies in the range of 0.1 - 50 µm and most preferably in the range of 0.5 - 50 µm.

The reaction stage containing the stacked bed hydrotreating catalyst system used in the present invention can be comprised of one or more fixed bed reactors or reaction zones each of which can comprise one or more catalyst beds of the same or different catalyst. Although other types of catalyst beds can be used, fixed beds are preferred. Such other types of catalyst beds include fluidized beds, ebullating beds, slurry beds, and moving beds. Interstage cooling or heating between reactors, reaction zones, or between catalyst beds in the same reactor, can be employed since some olefin saturation can take place, and olefin saturation and the desulfurization reaction are generally exothermic. A portion of the heat generated during hydrotreating can be recovered. Where this heat recovery option is not available, conventional cooling may be performed through cooling utilities such as cooling water or air, or through use of a hydrogen quench stream. In this manner, optimum reaction temperatures can be more easily maintained.

The catalyst system of the present invention comprises 5-95 vol.% of the first catalyst with the second catalyst comprising the remainder, preferably 40-60 vol.%, more preferably 5 to 50 vol.%. Thus, if the catalyst system comprises 50 vol.% of the first catalyst, the second catalyst will comprise 50 vol.% also.

Effective hydrotreating conditions include temperatures of from 150 to 400°C, a hydrogen partial pressure of from 1480 to 20786 kPa (200 to 3000 psig), a space velocity of from 0.1 to 10 liquid hourly space velocity (LHSV), and a hydrogen to feed ratio of from 89 to 1780 m³/m³ (500 to 10000 scf/B).

As stated above, the contacting of the lube oil boiling range feedstock with the stacked bed hydrotreating catalyst system produces a hydrotreated effluent comprising at least a gaseous product and a hydrotreated lubricating oil feedstock. The hydrotreated effluent is stripped to remove at least a portion of the gaseous product from the hydrotreated effluent thereby producing at least a lubricating oil basestock The means used herein to strip the hydrotreated effluent is not critical to the present invention. Thus, any stripping method, process, or means known can be used. Non-limiting examples of suitable stripping methods, means, and processes include flash drums, fractionators, knock-out drums, steam stripping, etc.

The above description is directed to preferred embodiments of the present invention.

The following examples will illustrate the improved effectiveness of the present invention, but is not meant to limit the present invention in any fashion.

### EXAMPLES

### EXAMPLE 1

A medium vacuum gas oil having the properties outlined in Table 1 was processed in an isothermal pilot plant over three catalysts systems at 1200 psig (8273.7 kPag) hydrogen partial pressure. The catalyst systems and operating conditions are given in Table 2. Catalyst B is a conventional hydrotreating catalyst having 4.5 wt.% Group VI metal, 23 wt.% Group VIII metal on an alumina support and has an average pore size of 14.0 nm. The bulk metal hydrotreating catalyst was a commercial bulk metal hydrotreating catalyst marketed under the name Nebula by Akzo-Nobel.

In the Examples, all the catalyst systems were lined out at 50 days on stream. A first order kinetic model with an activation energy of 31,000 cal/gmol was used to compare volume activities between the catalysts.

**TABLE 1**

| | **Medium Vacuum Gas Oil** |
|---|---|
| Density at 70°C (g/cc) | 0.88 |
| Nitrogen (wppm) | 700 |
| Sulfur (wt.%) | 2.6 |
| GCD 5 WT% Boiling Point (°C) | 334 |
| GCD 50 WT% Boiling Point (°C) | 441 |
| GCD 95 WT% Boiling Point (°C) | 531 |

**TABLE 2**

| **Catalyst System** | **100 vol.% Catalyst B** | **100 vol.% Nebula 1** | **50 vol.% Catalyst B followed by 50 vol.% Nebula 1** |
|---|---|---|---|
| Average Catalyst Temperature (°C) | 370 | 380 | 370 |
| Liquid Hourly Space Velocity (hr⁻¹) | 2 | 1 | 1 |
| Stripped reactor Effluent Nitrogen Content (wppm) | 227 | 17 | 34 |
| Nitrogen Removal Relative Volume Activity | 1 | 1.18 | 1.34 |

The Nitrogen Removal Relative Volume Activity ("RVA") for each catalyst system was calculated by simple first order kinetic modeling. As shown in Table 2, the 50/50 vol.% stacked bed catalyst system, with the large average pore size Catalyst B upstream of the bulk metal catalyst, showed higher nitrogen removal activity than either of the single catalyst systems demonstrated on their own.

### EXAMPLE 2

The hydrotreating ability of different stacked beds of Catalyst C and Nebula were analyzed by hydrotreating different feedstreams over the stacked beds in the in two parallel reactor trains of the same isothermal pilot plant unit used in Example 1 above. The feedstreams used were Medium Cycle Oils("MCO") from an FCC unit and blends of the MCO with a virgin feedstock were tested in two parallel reactor trains. The feed properties are described in Table 3, below.

In this Example, one reactor train consisted entirely of a conventional NiMo on Alumina hydrotreating catalyst, Catalyst C, with an average pore diameter of 7.5 nm. The other reactor train contained a stacked bed system with 75-vol. % of Catalyst C followed by 25-vol. % of Catalyst A, a bulk multimetallic sulfide catalyst having an average pore diameter of 5.5 nm.

The separate reactors in both trains were immersed in a fluidized sandbath for efficient heat transfer. Thus, the temperature of the first 75-vol. % of Catalyst C was at the same temperature whether it was in train 1 or 2. Likewise, the last 25-vol. % of Catalyst C in train 1 was at the same temperature as the last 25-vol. % of Catalyst A in train 2. Therefore, In Example 2, each of the two reactor trains was divided into two separate reactor vessels where the temperature of the first 75-volume% containing 75 vol.% of the catalyst loading of that reactor could be independently controlled from the last 25-volume % of catalyst.

The operating conditions for the two trains were 1350 psig (9307.9 kPag) H₂, liquid hourly space velocities ("LHSV") of 1.4 vol./hr/vol., and 5500-6300 SCF/B (979 to 1121 Nm3/m3) of hydrogen. The temperature schedule for both trains is described in Table 4 below.

**TABLE 3**

| **FEED** | **50% Normal FCC MCO** | **67% Normal FCC MCO** | **100% Normal FCC MCO** | **100% Heavy FCC MCO** |
|---|---|---|---|---|
| API Gravity | 18.1 | 15.0 | 9.5 | 7.0 |
| Hydrogen, wt.% | 10.65 | 10.04 | 8.77 | 8.61 |
| Sulfur, wt.% | 3.23 | 3.53 | 4.28 | 4.40 |
| Nitrogen, ppm | 959 | 1153 | 1485 | 1573 |
| Aromatics-Mono, wt.% | - | - | 12.0 | 8.8 |
| Aromatics-Di, wt.% | - | - | 43.9 | 41.7 |
| Aromatics-Poly, wt.% | - | - | 22.4 | 30.7 |
| | | | | |

| **Distillation, D2887 GCD** | | | | |
|---|---|---|---|---|
| 10 | 498 | 493 | 485 | 493 |
| 50 | 627 | 625 | 618 | 642 |
| 90 | 703 | 705 | 706 | 749 |
| 95 | 726 | 721 | 724 | 777 |

**TABLE 4**

| **Days on Oil** | **Feedstock** | **75%/25% Temperatures, °F** |
|---|---|---|
| 4-6 | 50% FCC MCO | 585/650 |
| 7-15 | 67% FCC MCO | 585/650 |
| 16-30 | 100% FCC MCO | 585-610/650-675 |
| 31-50 | 100% Heavy FCC MCO | 610-635/675-700 |

| | | |
|---|---|---|
| (585 °F=307.2°C; 610°F=321.1°C; 635°F=335°C; 650°F=343.3°C; 675°F=357.2°C; 700°F=371.1°C) | | |

The relative HDN volume activity of the stacked bed Catalyst C/Catalyst A compared to Catalyst A is shown in the figure below. Note that for the 50%, 67% and 100% FCC MCO feeds the stacked bed system with only 25-volume % of Catalyst A shows a stable activity advantage of 275%.

As shown in the Figure, when the 100% Heavy FCC MCO was used as the feed note the activity advantage for the stacked bed catalyst system containing begins to decrease from 275% to 225% and then was subsequently reduced over 20 days to slightly less than 150%.

### EXAMPLE 3

In this Example, a stacked bed catalyst system containing 75 vol.% of Catalyst B and 25 vol.% Nebula, both as described above, was used to hydrotreat a light cycle cat oil feed ("Feed A") and a heavier medium cycle cat oil feed ("Feed B") as described in Table 5 below. Example 2 was conducted in the same two reactor train pilot plant unit as described in Example 2 above. The operating conditions for the two trains were 1200 psig (8273.7 kPag) H₂, liquid hourly space velocities of 2 vol./hr/vol., and 5000 SCF/B (890Nm3/m3) of hydrogen.

The reactor effluents were stripped with nitrogen in an oven at 100°C to remove substantially all of the gaseous reaction products. The nitrogen content of the liquid reactor effluent was then analyzed by ASTM 4629. The temperature schedules for both trains along with the results of this example are described in Table 5 below.

**TABLE 5**

| **FEED** | **Feed A** | **Feed B** |
|---|---|---|
| API Gravity | 0.973 | 0.9 |
| Sulfur, wt.% | 2.6 | 2.50 |
| Nitrogen, ppm | 713 | 742 |
| | | |
| **Distillation, D2887 GCD** | | |
| 5 | 427 | 448 |
| 50 | 551 | 590 |
| 95 | 707 | 755 |
| EP | 764 | 823 |
| | | |
| Catalyst B Temperature | 570 | 617 |
| Nebula Temperature | 645 | 692 |
| Stripped Reactor Effluent Nitrogen Content | 2 | 7 |
| Nitrogen Removal Relative Volume Activity | 1.75 | 1.75 |

As can be seen in Table 5, when a conventional catalyst having an average pore diameter of 14nm was used in the first 75 vol.% of the reactor, the Nitrogen Removal Relative Volume Activity ("RVA") for the catalyst system remained constant when the heavier feed was used. In comparing the results of Example 3 to those obtained in Example 2, one can see that when a catalyst having a pore volume of 7.5nm preceded the bulk metal catalyst, the RVA of the catalyst system decreased. However, in Example 3, the heavier feed did not negatively impact the RVA of the catalyst system.

## Claims

1. A process to prepare lubricating oil basestocks from a lube oil boiling range feedstock comprising:
a) contacting a lube oil boiling range feedstock with a stacked bed hydrotreating catalyst system comprising at least a first and second hydrotreating catalyst in a reaction stage operated under effective hydrotreating conditions thereby producing a hydrotreated effluent comprising at least a gaseous product and a hydrotreated lubricating oil boiling range feedstock, wherein the second hydrotreating catalyst is downstream, in relation to the flow of the lubricating oil feedstock, from the first hydrotreating catalyst; and
b) stripping the hydrotreated effluent to remove at least a portion of the gaseous product from the hydrotreated effluent thereby producing at least a lubricating oil basestock;
wherein said first hydrotreating catalyst is selected from supported hydrotreating catalysts comprising 2 to 20 wt.% of at least one Group VIII metal, and 5 to 50 wt.% of at least one Group VI metal on a high surface area support material and having an average pore diameter of greater than 10nm, as measured by water adsorption porosimetry, and said second hydrotreating catalyst is selected from bulk metal hydrotreating catalyst comprising 30 to 100 wt.% of at least one Group VIII non-noble metal and at least one Group VIB metal, based on the total weight of the bulk catalyst particles, calculated as metal oxides and wherein the bulk catalyst particles have a surface area of at least 10 m²/g, and wherein the stacked bed hydrotreating catalyst system comprises 5-95 vol.% of the first hydrotreating catalyst with the second hydrotreating catalyst comprising the remainder.

2. The process according to claim 1 wherein said lubricating oil feedstock has a 10% distillation point greater than 650°F (343°C) and an endpoint of greater than 800°F (426°C), measured by ASTM D 86 or ASTM 2887, and are derived from mineral sources, synthetic sources, or a mixture of the two.

3. The process according to any of the preceding claims wherein said lubricating oil feedstock is selected from those derived from sources such as oils derived from solvent refining processes such as raffinates, partially solvent dewaxed oils, deasphalted oils, distillates, vacuum gas oils, coker gas oils, slack waxes, foots oils and the like, dewaxed oils, automatic transmission fluid feedstocks, and Fischer-Tropsch waxes.

4. The process according to any of the preceding claims wherein said lubricating oil feedstock contains up to 0.2 wt.% of nitrogen, based on the lubricating oil feedstock, and up to 3.0 wt.% of sulfur, based on the lubricating oil feedstock.

5. The process according to any of the preceding claims wherein said Group VIII metal of said first hydrotreating catalyst is selected from Co Ni, and mixtures thereof, said Group VI metal of said first hydrotreating catalyst is selected from Mo, W, and mixtures thereof, and high surface area support material is selected from silica, alumina, and mixtures thereof.

6. The process according to any of the preceding claims wherein said bulk metal hydrotreating catalyst comprises one Group VIII non-noble metal and two Group VIB metals wherein the molar ratio of Group VIB to Group VIII non-noble metals ranges from 10:1 - 1:10.

7. The process according to any of the preceding claims wherein the at least one Group VIII non-noble metal and at least one Group VIB metals are present as oxidic compounds of the corresponding metals, or if the catalyst composition has been sulfided, sulfidic compounds of the corresponding metals.

8. The process according to any of the preceding claims wherein the bulk metal hydrotreating catalysts have a surface area of at least 50 m²/g, a pore size volume of 0.05 to 5 ml/g, and a median diameter of at least 50 nm.

9. The process according to any of the preceding claims wherein said effective hydrotreating conditions include temperatures of from 150 to 400°C, a hydrogen partial pressure of from 1480 to 20786 kPa (200 to 3000 psig), a space velocity of from 0.1 to 10 liquid hourly space velocity (LHSV), and a hydrogen to feed ratio of from 89 to 1780 m³/m³ (500 to 10000 scf/B).

## Patentansprüche

1. Verfahren zur Herstellung von Schmierölgrundstöcken aus einem Schmieröleinsatzmaterial mit Siedebereich, bei dem
a) ein Schmieröl-Einsatzmaterial mit Siedebereich mit einem Mehrschicht-Hydrobehandlungskatalysatorsystem, das mindestens einen ersten und zweiten Hydrobehandlungskatalysator in einer unter effektiven Hydrobehandlungsbedingungen betriebenen Reaktionsstufe umfasst, in Kontakt gebracht wird, sodass dadurch ein hydrobehandelter Ausfluss erzeugt wird, der mindestens ein gasförmiges Produkt und ein hydrobehandeltes Schmieröleinsatzmaterial mit Siedebereich umfasst, wobei der zweite Hydrobehandlungskatalysator bezüglich des Flusses des Schmieröleinsatzmaterials flussabwärts von dem ersten Hydrobehandlungskatalysator gelegen ist und
b) der hydrobehandelte Ausfluss gestrippt wird, um mindestens einen Teil des gasförmigen Produkts von dem hydrobehandelten Ausfluss zu entfernen, wodurch mindestens ein Schmierölgrundstock erzeugt wird,
wobei der erste Hydrobehandlungskatalysator ausgewählt ist aus Hydrobehandlungsträgerkatalysatoren, die 2 bis 20 Gew.-% von mindestens einem Metall der Gruppe VIII und 5 bis 50 Ges.-% von mindestens einem Metall der Gruppe VI auf einem Trägermaterial mit großer Oberfläche umfassen, und die einen durchschnittlichen Porendurchmesser von mehr als 10 nm aufweisen, bestimmt durch Wasseradsorptionsporosimetrie und der zweite Hydrobehandlungskatalysator ausgewählt ist aus einem Massivmetall-Hydrobehandlungskatalysator, der 30 bis 100 Ges.-% von mindestens einem Nicht-Edelmetall der Gruppe VIII und mindestens einem Metall der Gruppe VIB, bezogen auf das Gesamtgewicht der massiven Katalysatorpartikel und berechnet als Metalloxide, wobei die massiven Katalysatorpartikel eine Oberfläche von mindestens 10m²/g aufweisen und wobei das Mehrschicht-Hydrobehandlungskatalysatorsystem 5-95 Vol.-% des ersten Hydrobehandlungskatalysators umfasst und der zweite Hydrobehandlungskatalysator den fehlenden Teil ausmacht.

2. Verfahren nach Anspruch 1, bei dem das Schmieröleinsatzmaterial einen 10% Destillationspunkt von mehr als 650°F (343°C) und einen Endpunkt von mehr als 800°F (426°C) aufweist, bestimmt durch ASTM D 86 oder ASTM 2887, und abgeleitet ist von Mineralquellen, synthetischen Quellen oder einer Mischung aus beiden.

3. Verfahren nach einem der vorhergehenden Ansprüche, bei dem das Schmieröleinsatzmaterial aus solchen ausgewählt ist, die von Quellen wie zum Beispiel von Lösemittelraffinierungsverfahren abgeleitete Öle, wie zum Beispiel Raffinate, teilweise lösemittelentwachste Öle, deasphaltierte Öle, Destillate, Vakuumgasöle, Kokereigasöle, paraffinische Rückstände, Klauenöl und dergleichen, entwachste Öle, Automatikgetriebefluid-Einsatzmaterialien und Fischer-Tropsch-Waxen abgeleitet sind.

4. Verfahren nach einem der vorhergehenden Ansprüche, bei dem das Schmieröleinsatzmaterial bis zu 0,2 Gew.-% Stickstoff, bezogen auf das Schmieröleinsatzmaterial, und bis zu 3,0 Gew.-% Schwefel, bezogen auf das Schmieröleinsatzmaterial, enthält.

5. Verfahren nach einem der vorhergehenden Ansprüche, bei dem das Metall der Gruppe VIII des ersten Hydrobehandlungskatalysators aus Co, Ni und Mischungen davon ausgewählt ist, das Metall der Gruppe VI des ersten Hydrobehandlungskatalysators aus Mo, W und Mischungen davon ausgewählt ist und das Trägermaterial mit großer Oberfläche aus Silica, Alumina und Mischungen davon ausgewählt ist.

6. Verfahren nach einem der vorhergehenden Ansprüche, bei dem der Massivmetall-Hydrobehandlungskatalysator ein Nicht-Edelmetall der Gruppe VIII und zwei Metalle der Gruppe VIB umfasst, wobei sich das Molverhältnis der Gruppe VIB zu den Nicht-Edelmetallen der Gruppe VIII von 10:1 - 1:10 erstreckt.

7. Verfahren nach einem der vorhergehenden Ansprüche, bei dem das mindestens eine Nicht-Edelmetall der Gruppe VIII und mindestens ein Metall der Gruppe VIB als oxidische Verbindungen des entsprechenden Metalls vorhanden sind, oder, falls die Katalysatorzusammensetzung verschwefelt wurde, als sulfidische Verbindungen des entsprechenden Metalls.

8. Verfahren nach einem der vorhergehenden Ansprüche, bei dem die Massivmetall-Hydrobehandlungskatalysatoren eine Oberfläche von mindestens 50m²/g, ein Porengrößenvolumen von 0,05 bis 5 mL/g und einen mittleren Durchmesser von mindestens 50 nm aufweisen.

9. Verfahren nach einem der vorhergehenden Ansprüche, bei dem die effektiven Hydrobehandlungsbedingungen Temperaturen von 150 bis 400°C, einen Wasserstoff-Partialüberdruck von 1480 bis 20786 kPa (200 bis 3000 psig), eine Raumgeschwindigkeit von 0,1 bis 10 LHSV und ein Wasserstoff-zu-Einsatzmaterial-Verhältnis von 89 bis 178 m³/m³ (500 bis 10000 scf/B) aufweisen.

## Revendications

1. Procédé pour préparer des huiles de base d'huile de graissage à partir d'une charge de départ ayant un domaine d'ébullition d'huile de graissage comprenant :
a) la mise en contact d'une charge de départ ayant un domaine d'ébullition d'huile de graissage avec un système de catalyseurs d'hydrotraitement en lits empilés comprenant au moins des premier et second catalyseurs d'hydrotraitement dans un étage de réaction amené à fonctionner dans des conditions d'hydrotraitement efficaces ce qui produit de cette manière un effluent hydrotraité comprenant au moins un produit gazeux et une charge de départ ayant un domaine d'ébullition d'huile de graissage hydrotraitée, le second catalyseur d'hydrotraitement étant en aval, par rapport à la circulation de la charge de départ d'huile de graissage, du premier catalyseur d'hydrotraitement ; et
b) l'extraction au gaz de l'effluent hydrotraité pour enlever au moins une partie du produit gazeux de l'effluent hydrotraité ce qui produit de cette manière au moins une huile de base d'huile de graissage ;
dans lequel ledit premier catalyseur d'hydrotraitement est choisi parmi les catalyseurs d'hydrotraitement supportés comprenant 2 à 20 % en poids d'au moins un métal du groupe VIII et 5 à 50 % en poids d'au moins un métal du groupe VI sur un matériau support de surface spécifique élevée et ayant un diamètre moyen des pores, tel que mesuré par porosimétrie par adsorption d'eau, supérieur à 10 nm et ledit second catalyseur d'hydrotraitement est choisi parmi les catalyseurs d'hydrotraitement métalliques massiques comprenant 30 à 100 % en poids d'au moins un métal non noble du groupe VIII et au moins un métal du groupe VIB, sur la base du poids total des particules de catalyseur massique, en termes d'oxydes métalliques, et dans lequel les particules de catalyseur massique ont une surface spécifique d'au moins 10 m²/g et dans lequel le système de catalyseurs d'hydrotraitement en lits empilés comprend 5-95 % en volume du premier catalyseur d'hydrotraitement, le second catalyseur d'hydrotraitement constituant le reste.

2. Procédé selon la revendication 1 dans lequel ladite charge de départ d'huile de graissage a un point de distillation à 10 % supérieur à 650 °F (343 °C) et un point final supérieur à 800 °F (426 °C), mesurés selon la norme ASTM D 86 ou ASTM 2887, et est issue de sources minérales, de sources synthétiques ou d'un mélange des deux.

3. Procédé selon l'une quelconque des revendications précédentes dans lequel ladite charge de départ d'huile de graissage est choisie parmi celles issues de sources telles que les huiles issues de procédés de raffinage au solvant telles que les raffinats, les huiles partiellement déparaffinées au solvant, les huiles désasphaltées, les distillats, les gazoles sous vide, les gazoles de cokéfaction, les gatschs, les huiles de pied et similaires, les huiles déparaffinées, les charges de départ de fluide pour transmissions automatiques et les cires de Fischer-Tropsch.

4. Procédé selon l'une quelconque des revendications précédentes dans lequel ladite charge de départ d'huile de graissage contient jusqu'à 0,2 % en poids d'azote, sur la base de la charge de départ d'huile de graissage, et jusqu'à 3,0 % en poids de soufre, sur la base de la charge de départ d'huile de graissage.

5. Procédé selon l'une quelconque des revendications précédentes dans lequel ledit métal du groupe VIII dudit premier catalyseur d'hydrotraitement est choisi parmi Co, Ni et les mélanges de ceux-ci, ledit métal du groupe VI dudit premier catalyseur d'hydrotraitement est choisi parmi Mo, W et les mélanges de ceux-ci et le matériau support de surface spécifique élevée est choisi parmi la silice, l'alumine et les mélanges de celles-ci.

6. Procédé selon l'une quelconque des revendications précédentes dans lequel ledit catalyseur d'hydrotraitement métallique massique comprend un métal non noble du groupe VIII et deux métaux du groupe VIB dans lequel le rapport molaire des métaux du groupe VIB au métal non noble du groupe VIII va de 10:1 à 1:10.

7. Procédé selon l'une quelconque des revendications précédentes dans lequel l'au moins un métal non noble du groupe VIII et au moins l'un des métaux du groupe VIB sont présents sous forme de composés oxydés des métaux correspondants ou, si la composition de catalyseur a été sulfurée, de composés sulfurés des métaux correspondants.

8. Procédé selon l'une quelconque des revendications précédentes dans lequel les catalyseurs d'hydrotraitement métalliques massiques ont une surface spécifique d'au moins 50 m²/g, un volume poreux de 0,05 à 5 ml/g et un diamètre médian des pores d'au moins 50 nm.

9. Procédé selon l'une quelconque des revendications précédentes dans lequel lesdites conditions d'hydrotraitement efficaces comprennent des températures de 150 à 400 °C, une pression partielle d'hydrogène de 1480 à 20786 kPa (200 à 3000 psi manométrique), une vitesse spatiale LHSV (vitesse spatiale horaire du liquide) de 0,1 à 10 et un rapport de l'hydrogène à la charge de 89 à 1780 m³/m³ (500 à 10000 pi³ std/B).
